# EUROPEAN PATENT SPECIFICATION

(11) **EP 3 338 920 B1**
(45) Date of publication and mention of the grant of the patent: **08.09.2021**
(21) Application number: 17199605.1
(22) Date of filing: 01.11.2017
(51) Int. Cl.: B22F 5/00, C22C 1/05, C22C 1/10, C23C 24/04

(54) **METHOD AND SYSTEM FOR FORMING A REINFORCED METALLIC STRUCTURE**
VERFAHREN UND SYSTEM ZUR BILDUNG EINER VERSTÄRKTEN METALLSTRUKTUR
PROCÉDÉ ET SYSTÈME POUR FORMER UNE STRUCTURE MÉTALLIQUE RENFORCÉE

(30) Priority: 22.12.2016 US 201615388567
(43) Date of publication of application: 27.06.2018
(73) Proprietor: Raytheon Technologies Corporation, Farmington, CT 06032 (US)
(72) Inventor: ROBERGE, Gary D, Tolland, CT Connecticut 06084 (US); BRINDLEY, William J, Hebron, CT Connecticut 06248 (US)
(74) Representative: Dehns

(56) References cited:
- EP-A1- 1 942 209
- WO-A1-2008/056345
- US-A1- 2004 219 383
- US-A1- 2009 120 539
- US-A1- 2010 172 789
- US-A1- 2012 171 041
- US-A1- 2013 180 432
- US-A1- 2014 356 219
- US-A1- 2015 165 697

## Description

### FIELD

The present disclosure is directed to a system and a method for creation of a reinforced metallic structure having reinforcing particles deposited simultaneously with cold-spray deposited particles.

### BACKGROUND

Gas turbine engines include multiple components, a portion of which are formed as sheet structures. These sheet structures are currently hot or cold formed using dies. The dies include a relatively durable material that is capable of withstanding the temperature, pressure, and other loads applied to the die via the selected forming operation. The material used in the dies may be relatively expensive. Furthermore, formation of dies is a relatively time-consuming and expensive process. The time and expense of forming the dies increases as the complexity, such as complex contours and size, of the desired part increases.

US 2014/356219 A1 discloses a method for producing a layer-type buildup of riblet foil involving applying a metal power to a reference mold, which has a female mold of a riblet structure, in such a manner that a metallic material is formed.

US 2012/171041 discloses a method for producing a thin-walled structural component from a casting material. The casting material is deposited as a power on a support by a kinetic cold gas spraying process so as to form the structural component.

EP 1942209 A1 discloses a method of manufacturing a homogenous metal matrix composite and cold spray deposition technique.

US 2010/0172789 discloses a method of coating a substrate with cryo-milled, nano-grained particles by cold spraying a mixture of a gamma matrix and dispersion strengthening material onto a substrate.

US 2009/0120539 A1 discloses a method of preparing a metal matrix composite, and a coating layer and bulk from the same.

US 2013/0180432 A1 discloses a coating for a turbine component comprising a ceramic phase and a ductile matrix having a greater ductility than the ceramic phase.

WO 2008/056345 discloses a powder feed apparatus for a spray deposition apparatus.

### SUMMARY

Disclosed herein is a method for forming a reinforced metallic structure according to claim 1.

In any of the foregoing embodiments, the reinforcing particles include at least one of a ceramic oxide, a boride, a carbide, a nitride, or high-strength metallic particles.

Also described is a system for forming a reinforced metallic structure according to claim 3.

Any of the foregoing embodiments may also include a device for separating the reinforced metallic structure from the tool.

In any of the foregoing embodiments, the second deposition source is capable of outputting reinforcing particles including at least one of a ceramic oxide, a boride, a carbide, a nitride, or high-strength metallic particles.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed, non-limiting, embodiments. The drawings that accompany the detailed description can be briefly described as follows:
FIG. 1 is a schematic cross-section of a gas turbine engine, in accordance with various embodiments;
FIG. 2 is a flowchart illustrating a method for forming a sheet structure usable in the gas turbine engine of FIG. 1 using a cold-spray technique, which does not fall within the scope of the invention;
FIG. 3 is a block diagram illustrating a system for forming a sheet structure using a cold-spray technique, which does not fall within the scope of the invention;
FIG. 4A is a drawing of a tool used for forming a sheet structure using a cold-spray technique, in accordance with various embodiments;
FIG. 4B is a drawing of the tool of FIG. 4A having an interface coating for receiving a cold-spray deposit, in accordance with various embodiments;
FIG. 4C is a drawing of a sheet structure using the tool and interface coating of FIG. 4B, in accordance with various embodiments;
FIG. 5A is a drawing of a tool having a recess in a formation surface for forming a sheet structure with a feature having a greater thickness relative to other portions of the sheet structure, in accordance with various embodiments;
FIG. 5B is a drawing of the sheet structure with the feature formed using the tool of FIG. 5A, in accordance with various embodiments;
FIG. 6A is a flowchart illustrating a method for forming a reinforced metallic structure having reinforcing particles therein, in accordance with the current invention;
FIG. 6B is a flowchart illustrating a method for forming a reinforced metallic structure having reinforcing particles therein, in accordance with the current invention;
FIG. 7A is a drawing illustrating a system for forming a reinforced metallic structure using a cold-spray gun having a first nozzle for ejecting metal particles and a second nozzle for ejecting reinforcing particles, which does not fall within the scope of the invention;
FIG. 7B is a drawing illustrating a system for forming a reinforced metallic structure by simultaneously ejecting metal particles using a cold-spray gun and reinforcing particles using another device, in accordance with the current invention,
FIG. 8 is a drawing illustrating a system for forming a reinforced metallic structure using a cold-spray gun having a mixing chamber and a single nozzle, which does not fall within the scope of the invention;
FIG. 9 is a drawing illustrating various reinforcing particles, in accordance with various embodiments;
FIG. 10A is a drawing illustrating a system for forming a reinforced metallic structure using a cold-spray gun for depositing reinforced particles that include metal and reinforcing particles, which does not fall within the scope of the invention; and
FIG. 10B is a drawing illustrating a reinforced metallic structure formed using the system of FIG. 10A.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact. Cross hatching lines may be used throughout the figures to denote different parts but not necessarily to denote the same or different materials.

As used herein, "aft" refers to the direction associated with the exhaust (e.g., the back end) of a gas turbine engine. As used herein, "forward" refers to the direction associated with the intake (e.g., the front end) of a gas turbine engine.

As used herein, "radially outward" refers to the direction generally away from the axis of rotation of a turbine engine. As used herein, "radially inward" refers to the direction generally towards the axis of rotation of a turbine engine.

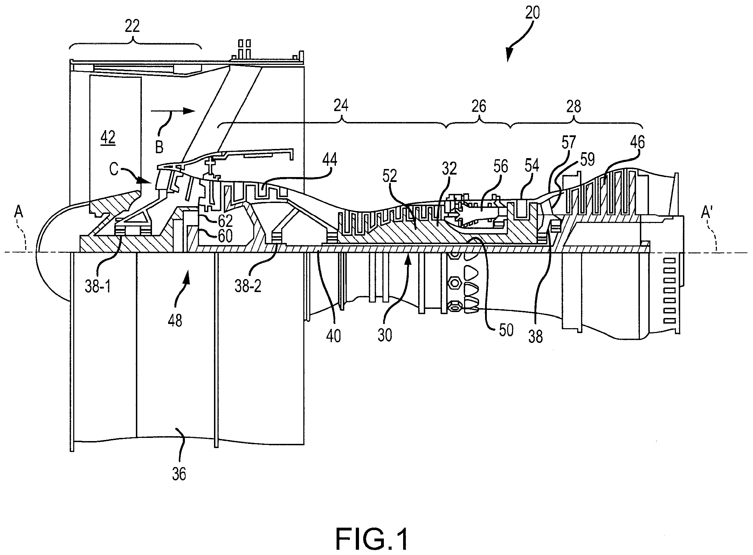

In various embodiments and with reference to FIG. 1, a gas turbine engine 20 is provided. The gas turbine engine 20 may be a two-spool turbofan that generally incorporates a fan section 22, a compressor section 24, a combustor section 26 and a turbine section 28. Alternative engines may include, for example, an augmentor section among other systems or features. In operation, the fan section 22 can drive coolant (e.g., air) along a bypass flow path B while the compressor section 24 can drive coolant along a core flow path C for compression and communication into the combustor section 26 then expansion through the turbine section 28. Although depicted as a two-spool turbofan gas turbine engine 20 herein, it should be understood that the concepts described herein are not limited to use with two-spool turbofans as the teachings may be applied to other types of turbine engines including turbojet, turboprop, turboshaft, or power generation turbines, with or without geared fan, geared compressor or three-spool architectures.

The gas turbine engine 20 may generally comprise a low speed spool 30 and a high speed spool 32 mounted for rotation about an engine central longitudinal axis A-A' relative to an engine static structure 36 or engine case via several bearing systems 38, 38-1, and 38-2. It should be understood that various bearing systems 38 at various locations may alternatively or additionally be provided, including for example, the bearing system 38, the bearing system 38-1, and the bearing system 38-2.

The low speed spool 30 may generally comprise an inner shaft 40 that interconnects a fan 42, a low pressure compressor 44 and a low pressure turbine 46. The inner shaft 40 may be connected to the fan 42 through a geared architecture 48 that can drive the fan 42 at a lower speed than the low speed spool 30. The geared architecture 48 may comprise a gear assembly 60 enclosed within a gear housing 62. The gear assembly 60 couples the inner shaft 40 to a rotating fan structure. The high speed spool 32 may comprise an outer shaft 50 that interconnects a high pressure compressor 52 and high pressure turbine 54. A combustor 56 may be located between high pressure compressor 52 and high pressure turbine 54. A mid-turbine frame 57 of the engine static structure 36 may be located generally between the high pressure turbine 54 and the low pressure turbine 46. Mid-turbine frame 57 may support one or more bearing systems 38 in the turbine section 28. The inner shaft 40 and the outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The airflow of core flow path C may be compressed by the low pressure compressor 44 then the high pressure compressor 52, mixed and burned with fuel in the combustor 56, then expanded over the high pressure turbine 54 and the low pressure turbine 46. The turbines 46, 54 rotationally drive the respective low speed spool 30 and high speed spool 32 in response to the expansion.

The gas turbine engine 20 may be, for example, a high-bypass ratio geared engine. In various embodiments, the bypass ratio of the gas turbine engine 20 may be greater than about six (6). In various embodiments, the bypass ratio of the gas turbine engine 20 may be greater than ten (10). In various embodiments, the geared architecture 48 may be an epicyclic gear train, such as a star gear system (sun gear in meshing engagement with a plurality of star gears supported by a carrier and in meshing engagement with a ring gear) or other gear system. The geared architecture 48 may have a gear reduction ratio of greater than about 2.3 and the low pressure turbine 46 may have a pressure ratio that is greater than about five (5). In various embodiments, the bypass ratio of the gas turbine engine 20 is greater than about ten (10:1). In various embodiments, the diameter of the fan 42 may be significantly larger than that of the low pressure compressor 44, and the low pressure turbine 46 may have a pressure ratio that is greater than about five (5:1). The low pressure turbine 46 pressure ratio may be measured prior to the inlet of the low pressure turbine 46 as related to the pressure at the outlet of the low pressure turbine 46 prior to an exhaust nozzle. It should be understood, however, that the above parameters are exemplary of various embodiments of a suitable geared architecture engine and that the present disclosure contemplates other gas turbine engines including direct drive turbofans. A gas turbine engine may comprise an industrial gas turbine (IGT) or a geared engine, such as a geared turbofan, or non-geared engine, such as a turbofan, a turboshaft, or may comprise any gas turbine engine as desired.

In various embodiments, the low pressure compressor 44, the high pressure compressor 52, the low pressure turbine 46, and the high pressure turbine 54 may comprise one or more stages or sets of rotating blades and one or more stages or sets of stationary vanes axially interspersed with the associated blade stages but non-rotating about engine central longitudinal axis A-A'. The compressor and turbine sections 24, 28 may be referred to as rotor systems. Within the rotor systems of the gas turbine engine 20 are multiple rotor disks, which may include one or more cover plates or minidisks. Minidisks may be configured to receive balancing weights or inserts for balancing the rotor systems.

Various components of gas turbine engine 20 may include one or more sheet structures. A sheet structure may include a relatively flat structure having a fairly broad surface relative to its thickness. For example, a sheet structure may have a thickness between 0.0254 millimeters (10 thousandths of an inch) and 12.7 millimeters (0.5 inches), or between 0.0381 millimeters (15 thousandths of an inch) and 6.35 millimeters (250 thousandths of an inch).

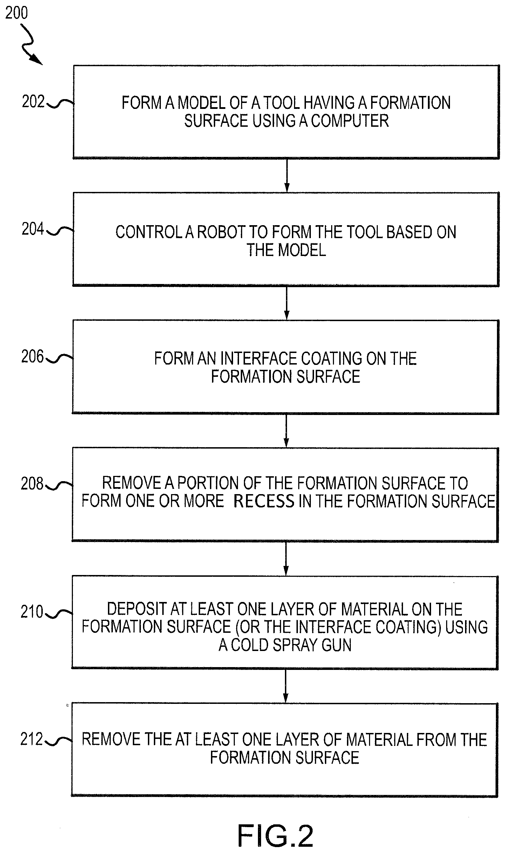

Conventional processes for manufacturing such sheet structures are relatively expensive and time-consuming. Referring to FIG. 2, a method 200 for forming a sheet structure using a cold-spray process is shown which does not fall within the scope of the invention. Formation of a sheet structure using the method 200 may be less expensive and less time-consuming than conventional processes. In various embodiments, the method 200 may be used to form sheet structures having a relatively large size. For example, the method 200 may be used to form sheet structures having a surface area of at least 2.54 centimeters squared (cm²) (1 inch squared (1 in.²)), 25.4 cm² (10 in.²), 91.44 cm² (36 in.²), or 254 cm² (100 in.²)_{.}

In block 202, a computer is used to create a model of a tool. A computer may include a processor, a memory, and input device, and an output device. A computer may include one or more computers having processors and one or more tangible, non-transitory memories and be capable of implementing logic. The processor(s) can be a general purpose processor, a digital signal processor (DSP), an application specific integrated circuit (ASIC), a field programmable gate array (FPGA), a graphical processing unit (GPU), or other programmable logic device, discrete gate or transistor logic, discrete hardware components, or any combination thereof. The memory may be any non-transitory memory capable of storing data. For example, the memory may store instructions to be executed by the processor, may store modeling software, may store a model of a component, or the like. The input device may include, for example, a mouse, a keyboard, a microphone, or the like. The output device may include, for example, a display, a speaker, an input/output port, or the like.

The tool includes a formation surface on which a material of the sheet structure is deposited. In that regard, the tool is modeled such that the formation surface corresponds to a desired shape of the sheet structure. The tool may be modeled using any three-dimensional modeling software such as SolidWorks™, available from Dassault Systèmes of Vélizy-Villacoublay, France.

The tool may include any material having sufficient yield strength to resist the formation in response to receiving spray from a cold-spray gun. As will be described below, a cold-spray deposition technique delivers material at a relatively low temperature. Accordingly, the tool may include materials having a relatively low thermal resistance, which may result in lower cost of the tools. For example, the tool may include a metal, a plastic, or another compound material such as nylon, polymers, high-temperature resins, aluminum, low melt alloys, or the like. A low melt alloy may include any metallic alloy that has a melting temperature of 233 degrees Celsius (C) (450 degrees Fahrenheit (450 degrees F)) or below. For example, a low melt alloy may include one or more of bismuth, lead, tin, cadmium, indium, and the like. Selection of a material for the tool may be based considering the cost of the material of the tool and a durability of the tool.

In block 204, a robot is controlled to form the tool based on the computer-generated model. The tool may be formed using additive manufacturing, such as stereolithography. In that regard, the robot may be an additive manufacturing device, such as a 3-D printer, connected to the computer. The computer may be electrically coupled to the additive manufacturing device such that the device forms the tool based on the model. In various embodiments, the robot may include a machine separate from the additive manufacturing device and may independently control the additive manufacturing device based on the computer-generated model. In various embodiments, a user may receive the model from the computer and may manually provide information corresponding to the model to an additive manufacturing device.

In block 206, an interface coating may be applied to the formation surface of the tool. The interface coating may include, for example, a metal formed on the formation surface using electroplating. The interface material may include, for example, an epoxy or low melt alloy. In that regard, the interface coating may provide various benefits such as erosion protection of the tool, thermal protection of the tool, generation of a desired surface finish or feature, facilitation of separation of the sheet structure from the tool, and increased rigidity and resistance to deformation resulting from contact with relatively high-velocity spray from a cold-spray gun. In that regard, the formation surface of the tool may include one or both of the interface material or the material of the tool.

In the current invention, it is desirable to form one or more features, such as ribs, in the sheet structure that have great thickness relative to other portions of the sheet structure. In the current invention, a portion of the formation surface is removed to form one or more recess in the formation surface in block 208. In response to the sheet structure material being cold-sprayed onto the formation surface, additional material may collect in the recess such that the corresponding part of the sheet structure has a greater thickness at the location corresponding to the recess. In various embodiments, the tool may be formed to have the recess such that removal of a portion of the formation surface is optional.

In block 210, at least one layer of material is cold-sprayed onto the formation surface (or the interface coating) using a cold-spray deposition technique that utilizes a cold-spray gun. A cold-spray deposition technique is based on direct additive deposition of fine metallic particles that are accelerated to supersonic speeds using inert gas and a cold-spray gun. Inert gas may include at least one of an inert gas, air, or a less reactive gas, such as nitrogen. The cold-spray gun outputs a gas that includes the metallic particles and the inert gas. The output gas is directed towards the formation surface. The kinetic energy used in the process enables bonding of the metallic particles to each other on the formation surface of the tool, allowing the metallic particles to bind together to form the sheet structure. In various embodiments, the inert gas may be heated to a temperature that is between 204.4 degrees C (400 degrees F) and 537.8 degrees C (1000 degrees F). The temperature of the inert gas may, however, remain significantly below the melting point of the material of the metallic particles. In this context, significantly may refer to 5 percent (5%), or 15%, or 25%.

In various embodiments, it may be desirable for the sheet structure to have a greater relative thickness at particular locations. In that regard, the cold-spray gun may be used to apply more of the metallic particles to the particular locations to increase the thickness at the particular locations.

In the current invention, the cold-spray gun is controlled by at least one of a computer or a robot. In that regard, the computer or robot may be programmed to spray a predetermined amount of the metallic particles at each location of the sheet structure. The predetermined amount of the metallic particles sprayed at each location may result in each location of the sheet structure achieving the desired thickness.

Using a computer, and an electromechanical control system that is controlled by the computer, to control the cold-spray gun may result in a relatively accurate deposition of the metallic particles. The computer (or a user) controls such deposition factors as rate of discharge of the metallic particles, a distance from the tool from which the cold-spray gun is used, and the rate of movement of the cold-spray gun relative to the tool to adjust the thickness of the sheet structure.

A cold-spray gun outputs a relatively narrow plume of the output gas. This relatively narrow plume results in an ability to precisely position the metallic particles where desired.

The metallic particles used to form the sheet structure may include various metals and corresponding alloys such as, for example, titanium or titanium alloys, nickel or nickel alloys, aluminum or aluminum alloys, titanium aluminide alloys, cobalt alloys, iron, or the like.

In block 212, the at least one layer of material (corresponding to the sheet structure) is removed from the formation surface. This sheet structure may be removed in a variety of manners. In various embodiments, the sheet structure may be physically manipulated away from the formation surface by applying a force to the sheet structure in a direction away from the formation surface. In various embodiments, this physical manipulation may be performed by a user grasping a portion of the sheet structure, may be performed by a user using a tool, such as a crowbar, to separate the sheet structure from the tool, or the like. In various embodiments, the tool may be constructed such that introduction of pressurized fluid causes flexure of the tool (potentially including the formation surface), thus facilitating release of the sheet structure. In various embodiments, water or another fluid may be introduced between the formation surface and the sheet structure via capillary action or other means. In that regard, the fluid may be frozen (and thus expand), exerting a separating force/pressure to facilitate release of the sheet structure.

In various embodiments, a releasing agent may be applied between the sheet structure and the tool to facilitate release of the sheet structure from the formation surface. The release agent may include, for example, Boron Nitride (i.e., a hexagonal boron nitride) or another similar release agent. The release agent may be applied between the sheet structure and the formation surface or between the formation surface and the interface coating prior to cold-spray deposition of the metallic particles or after cold-spray deposition of the metallic particles. The properties of the release agent may result in a weaker bond between the sheet structure and the tool, allowing the sheet structure to be removed from the tool with relative ease. In various embodiments, the release agent may be used and the sheet structure may still be physically manipulated away from the formation surface.

In various embodiments, the combination of the tool and the sheet structure may be heated to such a temperature that the sheet structure does not deform yet the tool, or interface coating, deforms or de-bonds from the sheet structure, facilitating release of the sheet structure. In various embodiments, the interface coating may include an adhesive having a melting point above that of the temperature of the cold-spray gas and below that of the sheet structure. In that regard, the sheet structure and the interface coating may be heated to the melting point of the interface coating, facilitating release of the sheet structure. The interface coating may then be reapplied to the tool prior to a new sheet structure being formed on the tool.

In various embodiments, the sheet structure may be etched from the tool. For example, an acid such as a Bronsted-Lowry acid or another etching agent or chemically reactive material may be applied to the tool, thereby etching the tool away from the sheet structure.

In various embodiments, additional operations may be performed on the sheet structure to complete the part after separation from the tool. For example, the additional operations may include machining of interfaces, welding of the part to additional parts, forming an integral portion of the sheet structure using a cold-spray deposition technique with a different tool, or the like.

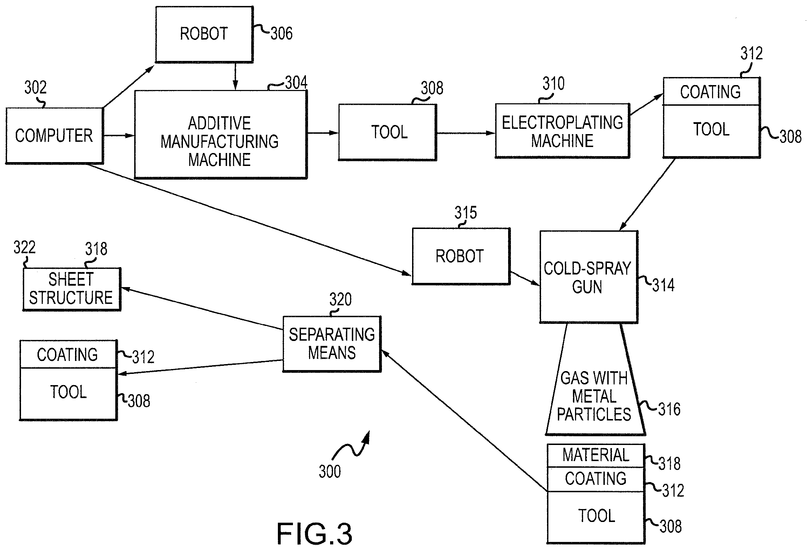

Turning now to FIG. 3, a system 300, which does not fall within the scope of the invention, for implementing the method 200 of FIG. 2 is shown. The system 300 includes a computer 302 in communication with an additive manufacturing machine 304 and a robot 306. In various embodiments, the robot 306 may not be present in the system 300. In various embodiments, the tool may be made using a machine different from the additive manufacturing machine 304.

A user may create a model of a tool using the computer 302. In various embodiments, the model may be received by the robot 306 and/or the additive manufacturing machine 304 which may, in turn, form a tool 308. In various embodiments, a user may provide the model to the robot 306 and/or the additive manufacturing machine 304. In various embodiments, a user may manually control the additive manufacturing machine 304 to create the tool 308.

The tool 308 may then be provided to an electroplating machine 310 or another device, which may apply an interface coating 312 on the tool 308. In various embodiments, the electroplating machine 310 may not be present in the system 300 such that no interface coating is applied. In various embodiments, the interface coating 312 may be applied via brushing, spraying, or another device. In various embodiments, the electroplating machine 310 may be controlled by the computer 302 or by another computer or robot to form the interface coating 312.

After the interface coating 312 is applied to the tool 308, the combined tool 308 and interface coating 312 may be subjected to spray from a cold-spray gun 314. The cold-spray gun 314 may direct a gas with metallic particles 316 towards the tool 308 and the interface coating 312. The gas with metallic particles 316 may hit the interface coating 312 and may begin to form one or more layer of material 318 on the interface coating 312. In various embodiments, the cold-spray gun 314 may be controlled by the computer 302 and/or by a robot 315. In various embodiments, the cold-spray gun 314 may be controlled by a separate computer or may be independently controlled.

After the material 318 has been applied to the interface coating 312, the combined tool 308, interface coating 312, and material 318 may be subjected to a separating means 320. The separating means 320 may include any method or structure used to separate the material 318 from the interface coating 312 as described above with reference to block 212 of FIG. 2. The separating means 320 may separate the material 318 from the interface coating 312. The resulting material 318 may correspond to a sheet structure 322.

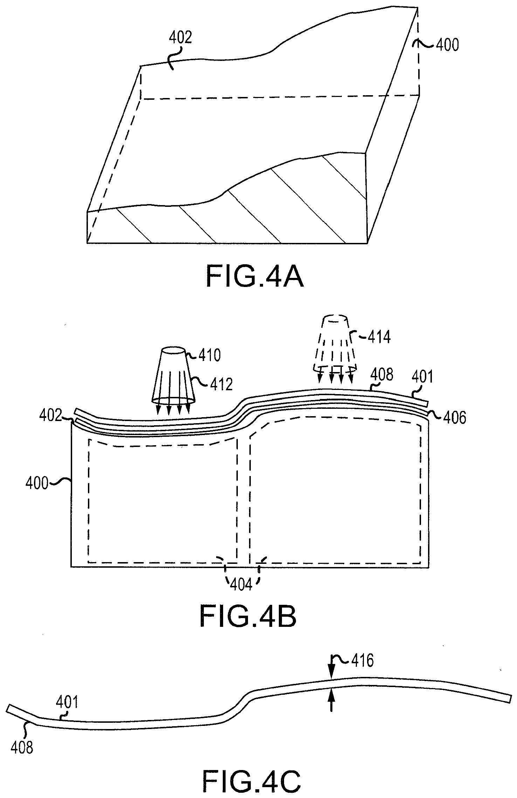

Referring now to FIGS. 4A and 4B, an exemplary tool 400 and sheet structure 401 is shown. The tool 400 has a formation surface 402. The formation surface 402 has a shape that corresponds to a desired shape of the sheet structure 401. The tool 400 includes one or more pockets 404 positioned within the tool 400 and having a material that is different from the remaining material of the tool 400. The pockets 404 may be designed to reduce the likelihood of deformation of the tool 400 due to impact with a relatively high velocity gas from a cold-spray gun 410. In that regard, the pockets 404 may include a material having a yield strength that is greater than that of the remaining portions of the tool 400. For example, the pockets 404 may include an epoxy or a low melt alloy.

An interface coating 406 may be applied to the formation surface 402 of the tool 400. The interface coating 406 may provide benefits as described above with reference to FIG. 2.

A cold-spray gun 410 may deposit metallic particles onto the interface coating 406 to form one or more layer of material 408. In order to deposit metallic particles onto the interface coating 406, the cold-spray gun 410 may move relative to the tool 400. For example, the cold-spray gun 410 may move from a first location 412 to a second location 414, depositing metallic particles at desired thicknesses along the way.

After the desirable amount of material 408 has been applied to the interface coating 406, the material 408 may be separated from the interface coating 406 in one or more manners as described above with reference to FIG. 2.

Referring now to FIGS. 4A, 4B, and 4C, the material 408 that is separated from the interface coating 406 may be the sheet structure 401. As shown, the sheet structure 401 has a shape that corresponds to the shape of the formation surface 402. The sheet structure 401 may have a thickness 416 that corresponds to the amount of metallic particles deposited on the interface coating 406. The cold-spray gun 410 may achieve the desired thickness 416 in one or more of a variety of manners. For example, the desired thickness 416 may be achieved by making a predetermined number of passes over the formation surface 402 with the cold-spray gun 410, may be achieved by adjusting the rate of flow of gas exiting the cold-spray gun 410, may be achieved by adjusting the rate at which the cold-spray gun 410 moves relative to the formation surface 402, or the like.

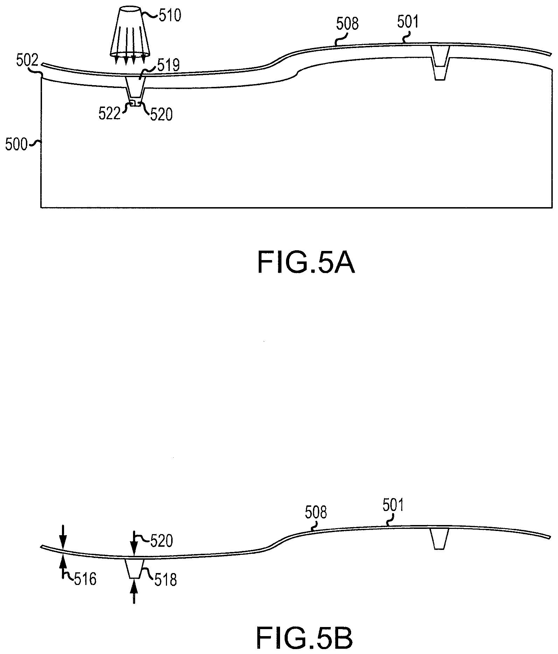

Turning now to FIGS. 5A and 5B, another tool 500 may include a formation surface 502 on which at least one layer of material 508 is directly deposited to form a sheet structure 501. Stated differently, the tool 500 may not include an interface coating. The formation surface 502 may have a shape that is similar to the formation surface 402 of FIG. 4A. However, it may be desirable for the sheet structure 501 to have one or more feature 518 such as a rib.

In order to form the feature 518, a portion 519 of the formation surface 502 is removed from the tool 500 to form a recess 520. In various embodiments, a tool that includes an interface coating may be manipulated such that a portion of the interface coating and/or the formation surface 502 is removed from the tool to form the feature on the sheet structure. In various embodiments, the tool 500 may be formed with the recess 520 in place such that the tool 500 may be used without removal of any of the tool 500.

After the portion 519 of the formation surface 502 is removed, a cold-spray gun 510 deposits metallic particles on the formation surface 502. In various embodiments, the cold-spray gun 510 may be manipulated across the formation surface 502 to deposit additional material within the recess 520. In various embodiments, the recess 520 may have particular features that facilitate bonding of the metallic particles within the recess 520. For example, the recess 520 may have an angle 522 that is greater than 90 degrees. The angle 522 may allow the metallic particles to bond together and entirely fill the recess 520.

In response to the sheet structure 501 being separated from the formation surface 502, the metal that was deposited in the recess 520 forms the feature 518 such as the rib. In various embodiments, the recess 520 may not be completely filled by the material. In that regard, the sheet structure 501 may have an indentation, or a volume, where the recess 520 is not completely filled.

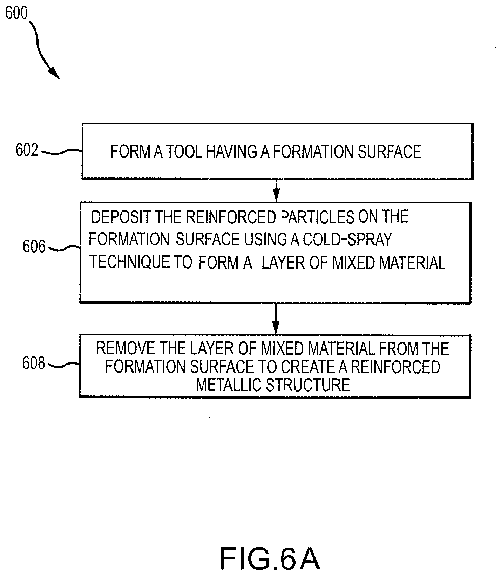

Turning to FIG. 6A, a method 600 for forming a reinforced metallic structure is shown. The method 600 begins in block 602 were a tool having a formation surface may be formed. The tool may be formed in a similar manner as the tool described above with reference to FIG. 2.

The reinforced metallic structure may include a metal along with reinforcing particles. The reinforcing particles may be metallic or non-metallic. For example, the reinforcing particles may include one or more of a ceramic oxide, a boride, a carbide, or a nitride, such as alumina, cubic boron nitride, silicon carbide, tungsten carbide, silicon nitride, or titanium diboride. The reinforcing particles may also include metal, for example high-strength metallic particles, such as tungsten, molybdenum, or high strength alloys of various metals.

In block 606, the metallic particles and the reinforcing particles may be deposited on the formation surface using a cold-spray technique. The metallic particles and the reinforcing particles are deposited separately and simultaneously. As the metallic particles and the reinforcing particles contact the formation surface, the metallic particles may bond together about the reinforcing particles. The combination of the bonded metal and reinforcing particles may be referred to as a layer of mixed material.

In block 608, the layer of mixed material is removed from the formation surface, resulting in a reinforced metallic structure. The layer of mixed material may be removed in a similar manner as the layer of material described above with reference to FIG. 2. Because the reinforced metallic structure includes the reinforcing particles, the reinforced metallic structure may have a greater tensile strength than a similar structure formed without reinforcing particles.

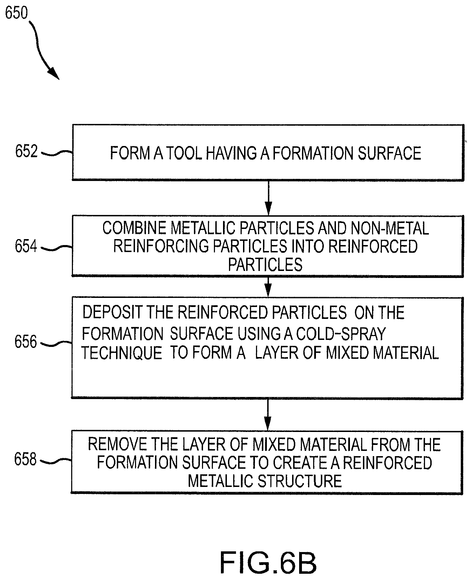

Turning to FIG. 6B, another method 650 for forming a reinforced metallic structure is shown which does not fall within the scope of the present invention. Block 652 may be performed in a similar manner as block 602 of FIG. 6A. In various embodiments, the metal and the reinforcing particles may be mixed prior to deposition by a cold-spray gun. In block 654, metallic particles and reinforcing particles may be combined into reinforced particles. At least a portion of the reinforced particles may include both the metal and the reinforcing particles.

In block 656, the reinforced particles may be deposited on the formation surface via cold spray deposition. The metal of the reinforced particles may bond together. Block 658 may be performed in a similar manner as block 608 of FIG. 6A.

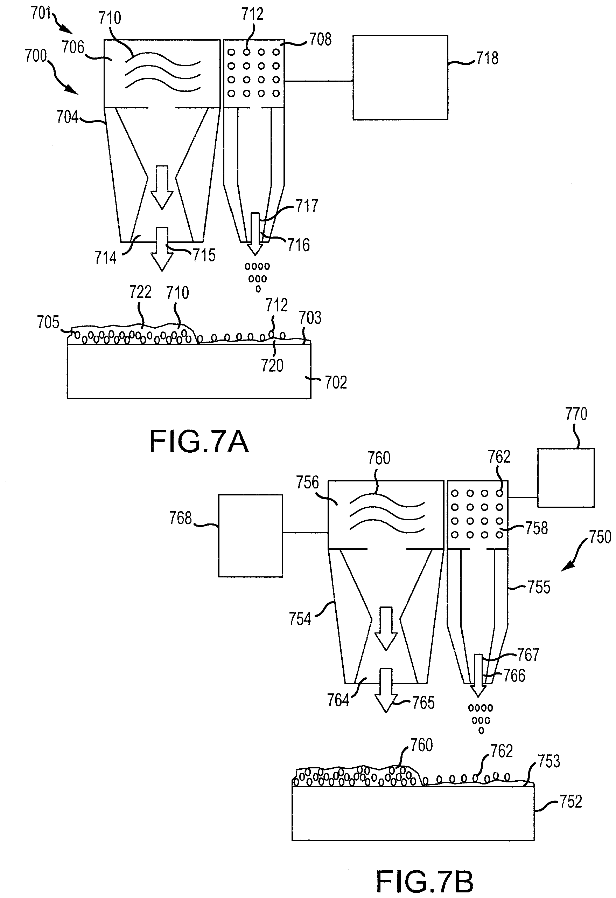

Turning to FIG. 7A, a system 700 for forming a reinforced metallic structure is shown which does not fall within the scope of the invention. The system 700 includes a tool 702 having a formation surface 703. The system 700 further includes a cold-spray gun 704. The cold-spray gun 704 has a metal storage chamber 706 in which metallic particles 710 are positioned. The cold-spray gun 704 further includes a reinforcing particles storage chamber 708 in which reinforcing particles 712 are positioned. The cold-spray gun 704 may deposit both metallic particles 710 and reinforcing particles 712 and, thus, may be referred to as a device capable of outputting reinforcing particles.

The cold-spray gun 704 includes a cold-spray nozzle 714 and a reinforcing particle nozzle 716. The cold-spray nozzle 714 is in communication with the metal storage chamber 706 and may receive the metal particles 710. The cold-spray nozzle 714 is designed to accelerate the metal particles 710 to a velocity sufficient for the metal particles 710 to bond together upon impact with the formation surface 703. The reinforcing particle nozzle 716 may accelerate the reinforcing particles 712 towards the formation surface 703.

The cold-spray nozzle 714 may be positioned adjacent the reinforcing particle nozzle 716. The metal particles 710 may be deposited simultaneously with the reinforcing particles 712. In that regard, the reinforcing particle nozzle 716 may eject the reinforcing particles 712 in a direction illustrated by an arrow 717. Likewise, the cold-spray nozzle 714 may eject the metal particles 710 in a direction illustrated by an arrow 715. Either of the reinforcing particles 712 or the metal particles 710 may reach the formation surface 703 first. If the reinforcing particles 712 reach the formation surface 703 first, the metal particles 710 may bond together about the reinforcing particles 712. If the metal particles 710 reach the formation surface 703 first, the reinforcing particles 712 may be received by the metal particles 710, thus coupling the reinforcing particles 712 to the metal particles 710.

In various embodiments (which does not fall within the scope of the current invention), the system 700 may include an electromechanical controller 718. The electromechanical controller 718 may include a controller and an actuator. The controller may determine a desired rate of ejection of the metal particles 710 and the reinforcing particles 712. The controller may also determine a desired rate of movement of the cold-spray gun 704 relative to the tool 702 and a location of the cold-spray gun 704 relative to the tool 702. The controller may control the actuator to move the cold-spray gun 704 relative to the tool 702 based on the desired rate of movement and the location of the cold-spray gun 704 relative to the tool 702.

In various embodiments, the electromechanical controller 718 may cause the cold-spray gun 704 to make multiple passes over the formation surface 703. For example, the electromechanical controller 718 may control the cold-spray gun 704 to deposit a first layer 720 of the metal particles 710 on the formation surface. The electromechanical controller 718 may then control the cold-spray gun 704 to deposit a second layer 722 that includes the metal particles 710 and the reinforcing particles 712. The reinforcing particles 712 may be deposited first, such that the reinforcing particles 712 are deposited on the first layer 720 of the metal particles 710. As the cold-spray gun 704 continues to move relative to the formation surface 703, the metal particles 710 may be deposited over the reinforcing particles 712, thus sealing the reinforcing particles 712 between the second layer 722 of the metal particles 710 and the first layer 720 of the metal particles 710. After the second pass of the cold-spray gun 704, a mixture of metal particles in reinforcing particles 705 may be formed on the formation surface 703. After all the desired metal particles 710 and reinforcing particles 712 have been deposited, the mixture of metal particles and reinforcing particles 705 may be removed from the tool 702 to form the reinforced metallic structure.

Turning to FIG. 7B, another system 750 for forming a reinforced metallic structure is shown. The system 750 includes a tool 752 having a formation surface 753. The system 750 further includes a cold-spray gun 754 and a second deposition source 755 capable of outputting reinforcing particles. The second deposition source 755 may be referred to as a capable of outputting reinforcing particles.

The cold-spray gun 754 includes a metal storage chamber 756 for holding metal particles 760. The second deposition source 755 includes a reinforcing particle storage chamber 758 for holding reinforcing particles 762.

The cold-spray gun 754 includes a cold-spray nozzle 764 in communication with the metal storage chamber 756. In that regard, the cold-spray nozzle 764 may receive the metal particles 760 and deposit the metal particles 760 on the formation surface 753 as shown by an arrow 765.

The second deposition source 755 includes a reinforcing particle nozzle 766 in communication with the reinforcing particle storage chamber 758. In that regard, the reinforcing particle nozzle 766 may receive the reinforcing particles 762 and deposit the reinforcing particles 762 on the formation surface 753 as shown by an arrow 767.

In the current invention, the system 750 includes an electromechanical metal controller 768 and an electromechanical particle controller 770. The electromechanical metal controller 768 controls the cold-spray gun 754. The electromechanical metal controller 768 controls the ejection rate of the metal particles 760, the rate of movement of the cold-spray gun 754 relative to the formation surface 753, and the location of the cold-spray gun 754 relative to the formation surface 753. The electromechanical particle controller 770 controls the second deposition source 755. The electromechanical particle controller 770 controls the ejection rate of the reinforcing particles 762, the rate of movement of the second deposition source 755 relative to the formation surface 753, and the location of the second deposition source 755 relative to the formation surface 753.

The electromechanical metal controller 768 controls the cold-spray gun 754 to deposit the metal particles 760 at a same time that the electromechanical particle controller 770 controls the second deposition source 755 to deposit the reinforcing particles 762.

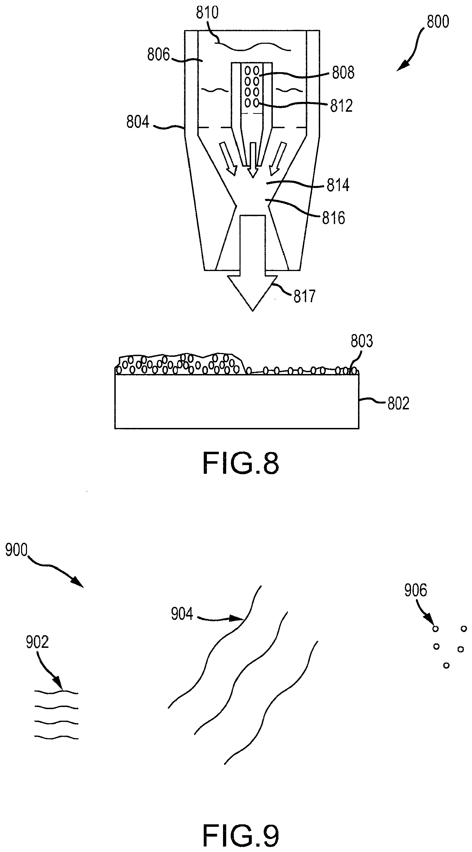

Turning to FIG. 8, a system 800 for forming a reinforced metallic structure is shown which does not fall within the scope of the invention. The system 800 includes a tool 802 having a formation surface 803. The system 800 further includes a cold-spray gun 804. The cold-spray gun 804 may include a metal storage chamber 806 and a reinforcing particle storage chamber 808. Metal particles 810 may be stored in the metal storage chamber 806, and reinforcing particles 812 may be stored in the reinforcing particle storage chamber 808.

The cold-spray gun 804 may further include a mixing chamber 814. The metal particles 810 and the reinforcing particles 812 may mix together in the mixing chamber 814. The mix of the metal particles 810 and the reinforcing particles 812 may then flow from the mixing chamber 814 through a cold-spray nozzle 816 as shown by an arrow 817. In various embodiments, the mixing chamber 814 may be separate from the cold-spray nozzle 816 or may be positioned within the cold-spray nozzle 816. The cold-spray nozzle 816 may eject the combination of the metal particles 810 and the reinforcing particles 812 at a sufficient velocity that the metal particles 810 bind together and about the reinforcing particles 812 upon impact with the formation surface 803. Thus, the cold-spray gun 804 may be referred to as a capable of outputting reinforcing particles.

Referring to FIG. 9, a plurality of reinforcing particles 900 are shown. The reinforcing particles 900 may include whiskers 902, fibers 904, pellets 906, or the like. The whiskers 902 are similar to the fibers 904 yet have a shorter length relative to therewith than do the fibers 904.

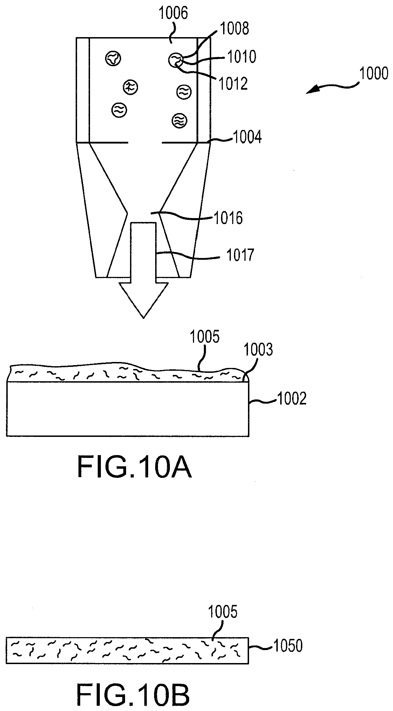

Turning now to FIG. 10A, a reinforced particle system 1000 for forming a reinforced metallic structure is shown which does not fall within the scope of the invention. The reinforced particle system 1000 includes a tool 1002 having a formation surface 1003. The reinforced particle system 1000 further includes a cold-spray gun 1004. The cold-spray gun 1004 is designed to deposit reinforced particles 1008 on the formation surface 1003. In that regard, the cold-spray gun 1004 includes a reinforced particle storage chamber 1006 for storing the reinforced particles 1008.

The reinforced particles 1008 may be prepared prior to being received by the reinforced particle storage chamber 1006. The reinforced particles 1008 may be made by combining metal particles and reinforcing particles together into the reinforced particles 1008. At least a portion of the reinforced particles 1008 include a metal 1010 along with reinforcing particles 1012.

As the reinforced particles 1008 are deposited on the formation surface 1003, as shown by an arrow 1017, the metal 1010 of the reinforced particles 1008 bind together with the other metal 1010 about the reinforcing particles 1012. The resulting combination of the bind and metal 1010 and reinforcing particles 1012 is a mixture of metal particles in reinforcing particles 1005.

Referring now to FIGS. 10A and 10B, the mixture of metal particles in reinforcing particles 1005 may be separated from the tool 1002 to form a reinforced metallic structure 1050. The mixture of metal particles and reinforcing particles 1005 may be separated from the tool 1002 in a similar manner as the layer of material is separated from the tool described above with reference to FIG. 2.

While the disclosure is described with reference to exemplary embodiments, it will be understood by those skilled in the art that various changes may be made and equivalents may be substituted without departing from the scope of the disclosure. In addition, different modifications may be made to adapt the teachings of the disclosure to particular situations or materials, without departing from the essential scope thereof. The disclosure is thus not limited to the particular examples disclosed herein, but includes all embodiments falling within the scope of the appended claims.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of a, b, or c" is used in the claims, it is intended that the phrase be interpreted to mean that a alone may be present in an embodiment, b alone may be present in an embodiment, c alone may be present in an embodiment, or that any combination of the elements a, b and c may be present in a single embodiment; for example, a and b, a and c, b and c, or a and b and c. Different cross-hatching is used throughout the figures to denote different parts but not necessarily to denote the same or different materials.

Systems, methods and apparatus are provided herein. In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for forming a reinforced metallic structure (501), comprising:
forming a tool (500; 752) having a formation surface (502; 753);
removing a portion of the formation surface (502) to form one or more recesses (520) in the formation surface (502; 753);
depositing a mixture of metallic particles (760) and reinforcing particles (762) on the formation surface (502; 753) of the tool (500; 752) by cold-spraying the metallic particles to form a layer of mixed material, the formation surface (502; 753) corresponding to a desired shape of the reinforced metallic structure (501); and
removing the layer of mixed material from the formation surface (502; 753) to create the reinforced metallic structure (501),
wherein depositing the mixture of the metallic particles (760) and the reinforcing particles (762) includes depositing the metallic particles using a cold-spray gun (754) and simultaneously depositing the reinforcing particles using a second deposition source (755) that is separate from the cold-spray gun (754),
wherein an electromechanical metal controller (768) controls the ejection rate of the metal particles (760), the rate of movement of the cold-spray gun (754) relative to the formation surface (753), and the location of the cold-spray gun (754) relative to the formation surface (753) to deposit the metal particles (760) at a same time that an electromechanical particle controller (770) controls the ejection rate of the reinforcing particles (762), the rate of movement of the second deposition source (755) relative to the formation surface (753), and the location of the second deposition source (755) relative to the formation surface (753) to deposit the reinforcing particles (762).

2. The method of claim 1, wherein the reinforcing particles (762) include at least one of a ceramic oxide, a boride, a carbide, a nitride, or high-strength metallic particles.

3. A system for forming a reinforced metallic structure (501), comprising:
a tool (500; 752) having a formation surface (502; 753) corresponding to a desired shape of the reinforced metallic structure (501), wherein the formation surface (502; 753) comprises one or more recesses (520) formed therein;
a cold-spray gun (754) configured to output a gas including metallic particles towards the formation surface (502; 753) at a velocity sufficiently great to cause the metallic particles to bond together;
a second deposition source (755) that is separate from the cold-spray gun (754) and is capable of outputting reinforcing particles towards the formation surface (502; 753) at a same time that the cold-spray gun (754) outputs the gas towards the formation surface (502; 753);
an electromechanical metal controller (768); and
an electromechanical particle controller (770),
wherein the electromechanical metal controller (768) is configured to control the ejection rate of the metal particles (760), the rate of movement of the cold-spray gun (754) relative to the formation surface (753), and the location of the cold-spray gun (754) relative to the formation surface (753) to deposit the metal particles (760) at a same time that the electromechanical particle controller (770) controls the ejection rate of the reinforcing particles (762), the rate of movement of the second deposition source (755) relative to the formation surface (753), and the location of the second deposition source (755) relative to the formation surface (753) to deposit the reinforcing particles (762).

4. The system of claim 3, further comprising a device for separating the reinforced metallic structure (501) from the tool (500).

5. The system of claim 3 or 4, wherein the second deposition source (755) is capable of outputting reinforcing particles including at least one of a ceramic oxide, a boride, a carbide, a nitride, or high-strength metallic particles.

## Patentansprüche

1. Verfahren zum Herstellen einer verstärkten Metallstruktur (501), umfassend:
Herstellen eines Werkzeugs (500; 752), das eine Formationsfläche (502; 753) aufweist;
Entfernen eines Abschnitts der Formationsfläche (502), um eine oder mehrere Vertiefungen (520) in der Formationsfläche (502; 753) zu bilden;
Abscheiden einer Mischung aus Metallpartikeln (760) und Verstärkungspartikeln (762) auf der Formationsfläche (502; 753) des Werkzeugs (500; 752) durch Kaltspritzen der Metallpartikel, so dass eine Schicht aus Mischmaterial gebildet wird, wobei die Formationsfläche (502; 753) einer erwünschten Form der verstärkten Metallstruktur (501) entspricht; und
Entfernen der Schicht aus Mischmaterial von der Formationsfläche (502; 753), um die verstärkte Metallstruktur (501) zu erzeugen,
wobei das Abscheiden der Mischung aus den Metallpartikeln (760) und den Verstärkungspartikeln (762) das Abscheiden der Metallpartikel unter Verwendung einer Kaltspritzpistole (754) und das gleichzeitige Abscheiden der Verstärkungspartikel unter Verwendung einer zweiten Abscheidungsquelle (755), die von der Kaltspritzpistole (754) getrennt ist, beinhaltet,
wobei eine elektromechanische Metallsteuerung (768) die Ausstoßrate der Metallpartikel (760), die Bewegungsgeschwindigkeit der Kaltspritzpistole (754) relativ zur Formationsfläche (753) und die Position der Kaltspritzpistole (754) relativ zur Formationsfläche (753) so steuert, dass die Metallpartikel (760) zu einer gleichen Zeit abgeschieden werden, wie eine elektromechanische Partikelsteuerung (770) die Ausstoßrate der Verstärkungspartikel (762), die Bewegungsgeschwindigkeit der zweiten Abscheidungsquelle (755) relativ zur Formationsfläche (753) und die Position der zweiten Abscheidungsquelle (755) relativ zur Formationsfläche (753) steuert, um die Verstärkungspartikel (762) abzuscheiden.

2. Verfahren nach Anspruch 1, wobei die Verstärkungspartikel (762) mindestens eines aus einem Keramikoxid, einem Borid, einem Carbid, einem Nitrid oder hochfesten Metallpartikeln beinhalten.

3. System zum Herstellen einer verstärkten Metallstruktur (501), umfassend:
ein Werkzeug (500; 752), das eine Formationsfläche (502; 753) aufweist, die einer erwünschten Form der verstärkten Metallstruktur (501) entspricht, wobei die Formationsfläche (502; 753) eine oder mehrere Vertiefungen (520), die darin ausgebildet sind, umfasst;
eine Kaltspritzpistole (754), die so konfiguriert ist, dass sie ein Gas, das Metallpartikel beinhaltet, auf eine Formationsfläche (502; 753) mit einer Geschwindigkeit, die groß genug ist, um zu bewirken, dass sich die Metallpartikel miteinander verbinden, ausstößt;
eine zweite Abscheidungsquelle (755), die von der Kaltspritzpistole (754) getrennt ist und in der Lage ist, Verstärkungspartikel auf die Formationsfläche (502; 753) zu einer gleichen Zeit auszustoßen, zu der die Kaltspritzpistole (754) das Gas auf die Formationsfläche (502; 753) ausstößt;
eine elektromechanische Metallsteuerung (768); und
eine elektromechanische Partikelsteuerung (770),
wobei die elektromechanische Metallsteuerung (768) so konfiguriert ist, dass sie die Ausstoßrate der Metallpartikel (760), die Bewegungsgeschwindigkeit der Kaltspritzpistole (754) relativ zur Formationsfläche (753) und die Position der Kaltspritzpistole (754) relativ zur Formationsfläche (753) so steuert, dass die Metallpartikel (760) zu einer gleichen Zeit abgegeben werden, wie die elektromechanische Partikelsteuerung (770) die Ausstoßrate der Verstärkungspartikel (762), die Bewegungsgeschwindigkeit der zweiten Abscheidungsquelle (755) relativ zur Formationsfläche (753) und die Position der zweiten Abscheidungsquelle (755) relativ zur Formationsfläche (753) steuert, um die Verstärkungspartikel (762) abzuscheiden.

4. System nach Anspruch 3, ferner eine Vorrichtung zum Abtrennen der verstärkten Metallstruktur (501) von dem Werkzeug (500) umfassend.

5. System nach Anspruch 3 oder 4, wobei die zweite Abscheidungsquelle (755) in der Lage ist, Verstärkungspartikel auszustoßen, die mindestens eines aus einem Keramikoxid, einem Borid, einem Carbid, einem Nitrid oder hochfesten Metallpartikeln beinhalten.

## Revendications

1. Procédé de formation d'une structure métallique renforcée (501), comprenant :
la formation d'un outil (500 ; 752) ayant une surface de formation (502 ; 753) ;
le retrait d'une partie de la surface de formation (502) pour former un ou plusieurs évidements (520) dans la surface de formation (502 ; 753) ;
le dépôt d'un mélange de particules métalliques (760) et de particules de renforcement (762) sur la surface de formation (502 ; 753) de l'outil (500 ; 752) en pulvérisant à froid les particules métalliques pour former une couche de matériau mélangé, la surface de formation (502 ; 753) correspondant à une forme souhaitée de la structure métallique renforcée (501) ; et
le retrait de la couche de matériau mélangé de la surface de formation (502 ; 753) pour créer la structure métallique renforcée (501),
dans lequel le dépôt du mélange des particules métalliques (760) et des particules de renforcement (762) comporte le dépôt des particules métalliques à l'aide d'un pistolet de pulvérisation à froid (754) et le dépôt simultané des particules de renforcement à l'aide d'une seconde source de dépôt (755) qui est distincte du pistolet de pulvérisation à froid (754),
dans lequel un dispositif de commande de métal électromécanique (768) commande la vitesse d'éjection des particules métalliques (760), la vitesse de déplacement du pistolet de pulvérisation à froid (754) par rapport à la surface de formation (753) et l'emplacement du pistolet de pulvérisation à froid (754) par rapport à la surface de formation (753) pour déposer les particules métalliques (760) en même temps qu'un dispositif de commande de particules électromécanique (770) commande la vitesse d'éjection des particules de renforcement (762), la vitesse de déplacement de la seconde source de dépôt (755) par rapport à la surface de formation (753), et l'emplacement de la seconde source de dépôt (755) par rapport à la surface de formation (753) pour déposer les particules de renforcement (762).

2. Procédé selon la revendication 1, dans lequel les particules de renforcement (762) comportent au moins l'un d'un oxyde céramique, d'un borure, d'un carbure, d'un nitrure ou de particules métalliques à haute résistance.

3. Système de formation d'une structure métallique renforcée (501), comprenant :
un outil (500 ; 752) ayant une surface de formation (502 ; 753) correspondant à une forme souhaitée de la structure métallique renforcée (501), dans lequel la surface de formation (502 ; 753) comprend un ou plusieurs évidements (520) qui y sont formés ;
un pistolet de pulvérisation à froid (754) configuré pour délivrer un gaz comportant des particules métalliques vers la surface de formation (502 ; 753) à une vitesse suffisamment élevée pour amener les particules métalliques à se lier ensemble ;
une seconde source de dépôt (755) qui est distincte du pistolet de pulvérisation à froid (754) et est capable de délivrer des particules de renforcement vers la surface de formation (502 ; 753) en même temps que le pistolet de pulvérisation à froid (754) délivre le gaz vers la surface de formation (502 ; 753) ;
un dispositif de commande de métal électromécanique (768) ; et
un dispositif de commande de particules électromécanique (770),
dans lequel le dispositif de commande de métal électromécanique (768) est configuré pour commander la vitesse d'éjection des particules métalliques (760), la vitesse de déplacement du pistolet de pulvérisation à froid (754) par rapport à la surface de formation (753) et l'emplacement du pistolet de pulvérisation à froid (754) par rapport à la surface de formation (753) pour déposer les particules métalliques (760) en même temps que le dispositif de commande de particules électromécanique (770) commande la vitesse d'éjection des particules de renforcement (762), la vitesse de déplacement de la seconde source de dépôt (755) par rapport à la surface de formation (753), et l'emplacement de la seconde source de dépôt (755) par rapport à la surface de formation (753) pour déposer les particules de renforcement (762).

4. Système selon la revendication 3, comprenant en outre un dispositif pour séparer la structure métallique renforcée (501) de l'outil (500).

5. Système selon la revendication 3 ou 4, dans lequel la seconde source de dépôt (755) est capable de libérer des particules de renforcement comportant au moins un oxyde céramique, un borure, un carbure, un nitrure ou des particules métalliques à haute résistance.
